# EUROPEAN PATENT APPLICATION

(11) **EP 4 300 682 A1**
(43) Date of publication of application: **03.01.2024**
(21) Application number: 22898858.0
(22) Date of filing: 25.10.2022
(51) Int. Cl.: H01M 50/24, H01M 50/204

(54) **BATTERY MODULE, AND BATTERY PACK AND ENERGY STORAGE DEVICE COMPRISING SAME**

(30) Priority: 26.11.2021 KR 20210166211
(71) Applicant: LG Energy Solution, Ltd., Seoul 07335 (KR)
(72) Inventor: BAE, Kyung-Hyun, Daejeon 34122 (KR); KIM, Hyeon-Kyu, Daejeon 34122 (KR); SHIN, Jong-Chan, Daejeon 34122 (KR); LEE, Bum-Hyun, Daejeon 34122 (KR); CHOI, Byung-Hyuk, Daejeon 34122 (KR)
(74) Representative: Plasseraud IP
(86) International application number: PCT/KR2022/016348
(87) International publication number: WO 2023/096176

(57) **Abstract**

A battery module according to an embodiment of the present disclosure includes battery cells stacked with each other, a pair of end plates provided at both ends of the battery cells in the stacking direction of the battery cells, and a fastening unit fastened to the pair of end plates along the stacking direction and configured to press the pair of end plates along the stacking direction.

## Description

### TECHNICAL FIELD

The present disclosure relates to a battery module, and a battery pack and an energy storage system including the same.

The present application claims priority to Korean Patent Application No. 10-2021-0166211 filed on November 26, 2021 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

In the case of a conventional battery module, generally, battery cells are fixed by stacking a plurality of cartridges. However, in such a conventional structure, the efficiency of the assembly process is reduced due to the stacking of the plurality of cartridges, and the lifespan performance of the battery cells is frequently deteriorated due to the vulnerability to the decrease in pressure loss caused by the occurrence of swelling of the battery cells in the future.

In addition, in the conventional structure, when a battery cell is ignited due to an abnormal situation, there is a high possibility of exposure to flame or heat transfer to an adjacent battery cell, which is disadvantageous in terms of safety.

Therefore, it is requested to find a way to provide a battery module that may improve the assembly process efficiency, improve the lifespan performance of battery cells, and suppress fire transition in abnormal situations, and a battery pack and an energy storage system including the same.

### DISCLOSURE

### Technical Problem

Accordingly, the present disclosure is directed to providing a battery module capable of improving assembly process efficiency, and a battery pack and an energy storage system including the same.

In addition, another object of the present disclosure is to provide a battery module capable of improving lifespan performance of battery cells, and a battery pack and an energy storage system including the same.

In addition, another object of the present disclosure is to provide a battery module capable of suppressing fire transition in an abnormal situation, and a battery pack and an energy storage system including the same.

### Technical Solution

In one aspect of the present disclosure, there is provided a battery module, comprising: battery cells stacked with each other; a pair of end plates provided at both ends of the battery cells in the stacking direction of the battery cells; and a fastening unit fastened to the pair of end plates along the stacking direction and configured to press the pair of end plates along the stacking direction.

Preferably, each of the battery cells may include an electrode assembly; a pair of electrode leads connected to the electrode assembly; and a battery case including a case body configured to form an accommodation space for accommodating the electrode assembly and a case terrace configured to extend from the case body and protrude the pair of electrode leads, and the pair of end plates may press the case bodies of the battery cells in the stacking direction.

Preferably, the pair of end plates may be in surface contact with the case bodies of the battery cells in the stacking direction.

Preferably, the pair of end plates may include a top plate disposed on an upper side of the battery cells in the stacking direction; and a bottom plate disposed on a lower side of the battery cells at an opposite side of the top plate, and the top plate and the bottom plate may include a compression pad provided on an inner surface facing the battery cells.

Preferably, the compression pad may be in surface contact with the case body of the facing battery cell.

Preferably, the battery module may further comprise a buffer member disposed between the battery cells in the stacking direction and provided in surface contact with the battery cells facing each other.

Preferably, the buffer member may be disposed in a center portion of the battery cells in the stacking direction.

Preferably, the buffer member may be provided with a thermistor seating groove in which a thermistor unit for measuring temperature of the battery cells is seated.

Preferably, the thermistor seating groove may be formed to be equal to or larger than the thickness of the thermistor unit so that the thermistor unit does not protrude out of an upper surface of the buffer member in the stacking direction when the thermistor unit is mounted.

Preferably, the thermistor unit may include a thermistor body seated in the thermistor seating groove; a thermistor wire having a predetermined length and connected to the thermistor body; and a connector provided to the thermistor wire for connection with an external terminal.

Preferably, the thermistor unit may include a mounting member provided on the thermistor wire and configured to guide fixing of the thermistor unit.

Preferably, the mounting member may be mounted on the thermistor wire to be movable along a lengthwise direction of the thermistor wire.

Preferably, the battery module may further comprise a pair of mica sheets provided between the pair of end plates and configured to cover both sides of the battery cells.

In addition, the present disclosure provides a battery pack, comprising at least one battery module according to the above embodiments.

In addition, the present disclosure provides an energy storage system, comprising at least one battery pack according to the above embodiment.

### Advantageous Effects

According to various embodiments as described above, a battery module capable of improving assembly process efficiency, and a battery pack and an energy storage system including the same may be provided.

In addition, according to various embodiments as described above, a battery module capable of improving lifespan performance of battery cells, and a battery pack and an energy storage system including the same may be provided.

In addition, according to various embodiments as described above, a battery module capable of suppressing the transition of a fire in an abnormal situation, and a battery pack and an energy storage system including the same may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module according to an embodiment of the present disclosure.
FIG. 2 is an exploded perspective view of the battery module of FIG. 1.
FIG. 3 is a cross-sectional side view of the battery module of FIG. 1.
FIGS. 4 and 5 are views for describing a top plate of an end plate of the battery module of FIG. 1.
FIGS. 6 and 7 are views for describing a bottom plate of the end plate of the battery module of FIG. 1.
FIG. 8 is a view for describing a buffer member of the battery module of FIG. 1.
FIG. 9 is a view for describing a thermistor unit of the battery module of FIG. 1.
FIGS. 10 to 12 are views for describing a bus bar assembly of the battery module of FIG. 1.
FIG. 13 is a view for describing a battery module assembly according to an embodiment of the present disclosure.
FIG. 14 is a view for describing a battery pack according to an embodiment of the present disclosure.

### BEST MODE

The present disclosure will now be described more fully with reference to the accompanying drawings, in which exemplary embodiments of the present disclosure are shown. These embodiments are provided so that the present disclosure will be thorough and complete, and will fully convey the concept of the present disclosure to one of ordinary skill in the art, and the present disclosure may be embodied in many different forms and should not be construed as being limited to the embodiments set forth herein. In addition, in order to help the understanding of the present disclosure, the accompanying drawings are not drawn to scale, but dimensions of some components may be exaggerated.

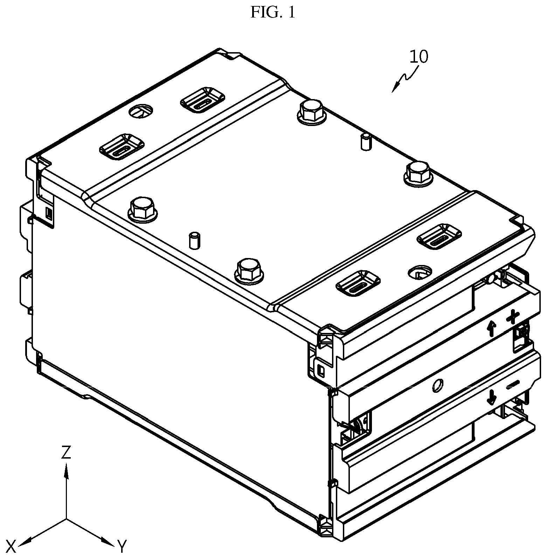

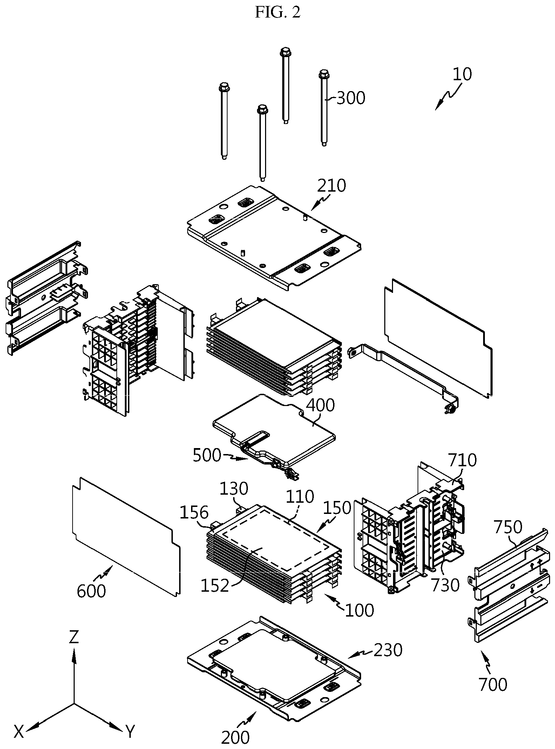

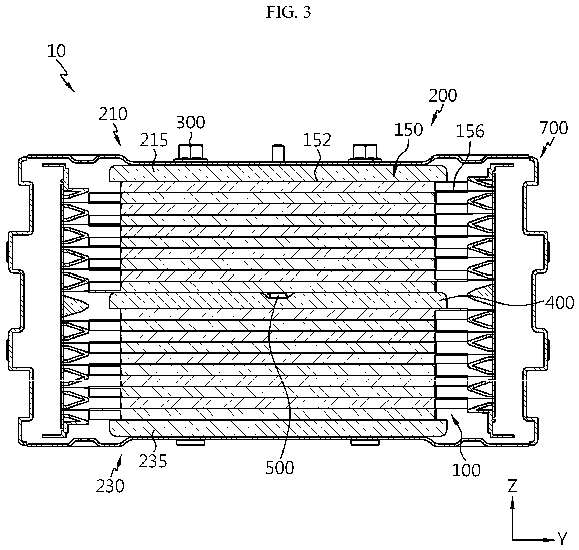

FIG. 1 is a view for describing a battery module according to an embodiment of the present disclosure, FIG. 2 is an exploded perspective view of the battery module of FIG. 1, and FIG. 3 is a cross-sectional side view of the battery module of FIG. 1.

Referring to FIGS. 1 to 3, a battery module 10 may include battery cells 100, a pair of end plates 200, and a fastening unit 300.

The battery cells 100 may be stacked with each other along the Z-axis direction of the battery module 10. As a secondary battery, the battery cells 100 may be provided as a pouch-type secondary battery, a prismatic secondary battery, or a cylindrical secondary battery. Hereinafter, in the present embodiment, the battery cells 100 will be described as being provided as a pouch-type secondary battery.

The pair of end plates 200 may be provided at both ends of the battery cells 100 in a stacking direction (Z-axis direction) of the battery cells 100. Accordingly, the pair of end plates 200 may cover the battery cells 100 on both outermost sides in the stacking direction (Z-axis direction) of the battery cells 100.

The fastening unit 300 may be fastened to the pair of end plates 200 along the stacking direction (Z-axis direction). The fastening unit 300 may be configured to press the pair of end plates 200 along the stacking direction (Z-axis direction).

In the present embodiment, the plurality of battery cells 100 may be stably fixed and supported in the stacking direction (Z-axis direction) through the pressurization of the pair of end plates 200 by the fastening unit 300.

Accordingly, in the present embodiment, when the battery cells 100 are stacked, an additional component such as a plurality of separate cartridges for fixing each battery cell as in the prior art is not required, and the process efficiency degradation problem such as assembly process delay caused by the stacking of the plurality of cartridges as in the prior art may also be significantly reduced.

In addition, in the present embodiment, since the end plate 200 is pressurized in the stacking direction (Z-axis direction) by the fastening unit 300, when an abnormal situation such as swelling of the battery cell 100 occurs later, pressure loss may be effectively prevented to minimize the degradation of the lifespan performance of the battery cells 100.

Hereinafter, each component of the battery module 10 according to the present embodiment will be described in more detail.

The battery cells 100 may include an electrode assembly 110, a pair of electrode leads 130, and a battery case 150, respectively.

The electrode assembly 110 may include a first electrode plate having first polarity, a second electrode plate having second polarity, and a separator interposed between the first electrode plate and the second electrode plate. The first electrode plate is a positive electrode plate or a negative electrode plate, and the second electrode plate may correspond to an electrode plate having a polarity opposite to that of the first electrode plate.

The pair of electrode leads 130 are connected to the electrode assembly 110 and may protrude out of the battery case 150 described later. The pair of electrode leads 130 may include a positive electrode lead and a negative electrode lead. In addition, the pair of electrode leads 130 may be provided to protrude out of either side or both sides of the battery case 150. Hereinafter, in the present embodiment, the pair of electrode leads 130 will be described as being provided to protrude from one side of the battery case 150.

The battery case 150 may accommodate a part of the electrode assembly 110 and the pair of electrode leads 130, and form an appearance of the battery cell 100.

The battery case 150 may include a case body 152 and a case terrace 156.

The case body 152 may accommodate the electrode assembly 110. To this end, an accommodation space capable of accommodating the electrode assembly 110 may be provided in the case body 152.

The case terrace 156 extends from the case body 152 along the lengthwise direction (Y-axis direction) of the battery case 150, and may be provided to have a predetermined step difference with the case body 152 in the stacking direction (Z-axis direction).

The case terrace 152 may protrude the pair of electrode leads 130 for electrical connection of the electrode leads 130 of the battery cells 100.

When the pair of end plates 200 are fastened through the fastening unit 300, the case body 152 of the battery case 150 of the battery cells 100 may be pressed in the stacking direction (Z-axis direction).

Specifically, the pair of end plates 200 may press the case body 152 of the battery case 150 of the battery cells 100 disposed on the outermost upper and lower sides in the stacking direction (Z-axis direction). In addition, the pair of end plates 200 may be in surface contact with the case body 152 of the battery cells 100 in the stacking direction (Z-axis direction).

Accordingly, the fastening unit 300 presses the facing surfaces of the pair of end plates 200 to press the surface of the case body 152 of the battery cells 100 disposed at the outermost upper and lower sides in the stacking direction (Z-axis direction) of the battery cells 100.

In the present embodiment, through this surface pressurization, it is possible to stably maintain the initial pressing force toward the battery cells 100, and by minimizing the deviation of the pressing force of the stacked battery cells 100, it is possible to implement a uniform pressing structure of the battery cells 100.

Hereinafter, the pair of end plates 200 will be described in more detail.

The pair of end plates 200 may include a top plate 210 and a bottom plate 230.

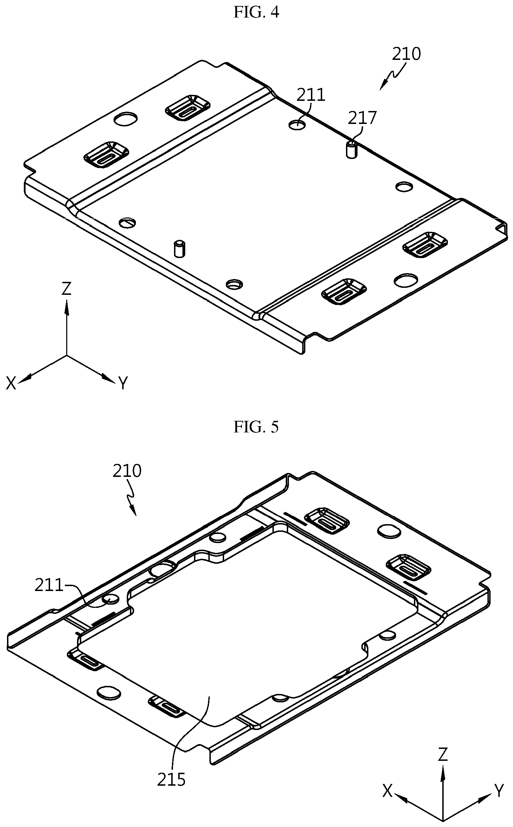

FIGS. 4 and 5 are views for describing a top plate of an end plate of the battery module of FIG. 1.

Referring to FIGS. 4 and 5 and FIGS. 1 to 3 above, the top plate 210 may be disposed at the upper side (+Z-axis direction) of the battery cells 100 in the stacking direction (Z-axis direction).

The top plate 200 may include a fastening portion 211 and a compression pad 215.

The fastening portion 211 is for coupling with the fastening unit 300, and may be provided to correspond to the number of the fastening unit 300. In the present embodiment, as a plurality of fastening units 300 to be described later are provided, a plurality of fastening portions 211 may be provided correspondingly. The plurality of fastening portions 211 may include a fastening hole 211 through which the fastening unit 300 to be described later may pass.

The plurality of fastening portions 211 may be provided on an edge side of the top plate 210. This is to prevent interference of the battery cells 100 when the fastening unit 300 is fastened.

The plurality of fastening portions 211 may be disposed symmetrically with each other at the edge of the top plate 210. This is to guide more stable and even pressurization when the fastening unit 300 is fastened.

The compression pad 215 may be provided on an inner surface of the top plate 210 facing the battery cells 100, specifically, on a bottom surface (-Z-axis direction) of the top plate 210.

The compression pad 215 may be in surface contact with the case body 152 of the facing battery cell 100. Specifically, the compression pad 215 may be in surface contact with the case body 152 of the battery cell 100 disposed at the top end (+Z-axis direction) in the stacking direction (Z-axis direction).

The compression pad 215 may be made of expanded polypropylene (EPP). Accordingly, when pressurization is applied through the fastening unit 300 or an external shock is applied, it is possible to buffer the impact to the battery cells 100 and to secure insulation performance.

In addition, the top plate 200 may be provided with a fastening protrusion 217.

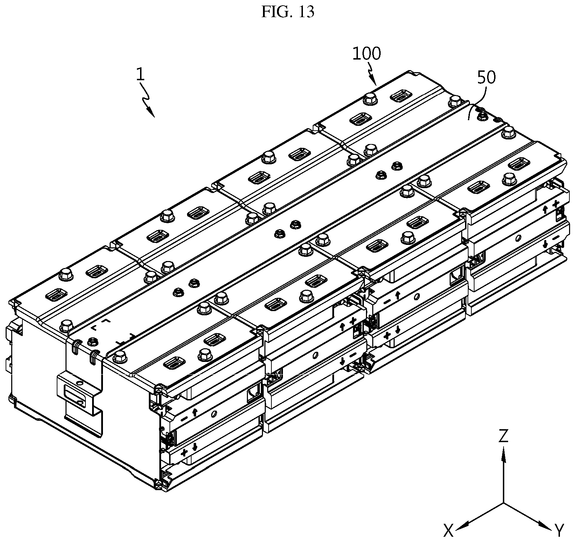

The fastening protrusion 217 is for coupling with the module connection portion 50 for configuring a battery module assembly (1, see FIG. 13) to be described later, and may be provided on the top surface of the top plate 217.

At least one or more fastening protrusions 217 may be provided. Hereinafter, in the present embodiment, the fastening protrusion 217 will be described as being provided in plurality. The plurality of fastening protrusions 217 are provided on an upper edge of the top plate 210 and may be disposed between the plurality of fastening portions 211.

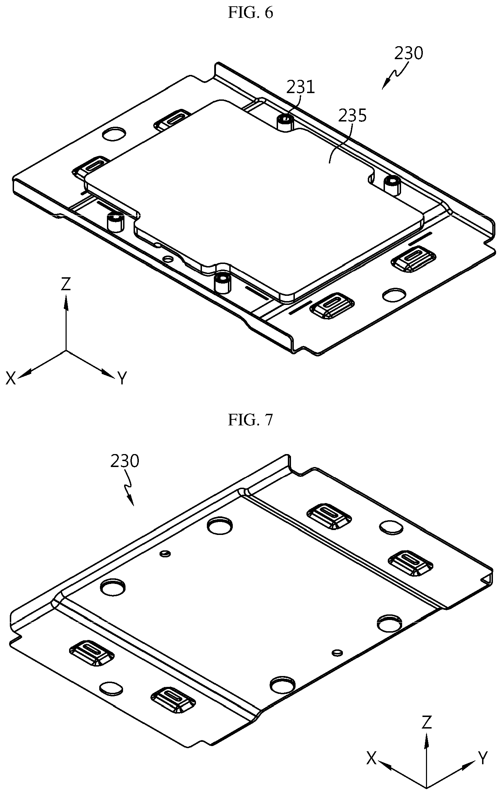

FIGS. 6 and 7 are views for describing a bottom plate of the end plate of the battery module of FIG. 1.

Referring to FIGS. 6 and 7 and FIGS. 1 to 3 above, the bottom plate 230 may be disposed on the lower side (-Z-axis direction) of the battery cells 100 at the opposite side (-Z-axis direction) of the top plate 210.

The bottom plate 230 may include a fastening portion 231 and a compression pad 235.

The fastening portion 231 is for coupling with the fastening unit 300, and may be provided to correspond to the number of the fastening unit 300. In the present embodiment, as the plurality of fastening units 300 to be described later are provided, a plurality of fastening portions 231 may be provided correspondingly.

The plurality of fastening portion 231 may be provided on an edge side of the bottom plate 230. This is to prevent interference of the battery cells 100 when the fastening unit 300 is fastened.

The plurality of fastening portions 231 are provided to be symmetrically disposed on the edge of the bottom plate 230 and may be provided at a position corresponding to the plurality of fastening portions 211 of the top plate 210. This is to guide more stable and even pressurization when the fastening unit 300 is fastened.

The plurality of fastening portions 231 may be provided with a fastening boss 231 fastened and coupled to the fastening unit 300 to be described later. The fastening boss 231 may protrude to a predetermined height from the top surface (+Z-axis direction) of the bottom plate 230, and may have a screw thread for fastening the fastening unit 300 therein.

The compression pad 235 may be provided on an inner surface of the bottom plate 230 facing the battery cells 100, specifically, on an upper surface (+Z-axis direction) of the bottom plate 230.

The compression pad 235 may be in surface contact with the case body 152 of the facing battery cell 100. Specifically, the compression pad 235 may be in surface contact with the case body 152 of the battery cell 100 disposed at the bottom end (-Z-axis direction) in the stacking direction (Z-axis direction).

In addition, the compression pad 235 may also be provided with expanded polypropylene (EPP). Accordingly, when pressurization is applied through the fastening unit 300 or an external shock is applied, it is possible to buffer the impact to the battery cells 100 and to secure insulation performance.

The fastening unit 300 may be provided in plurality. The plurality of fastening units 300 may include long bolts of a predetermined length.

The plurality of fastening units 300 provided with such long bolts pass through the fastening portion 211 of the top plate 210 and fasten the fastening portion 231 of the bottom plate 230, so it is possible to press in surface contact with the pair of end plates 200 in the stacking direction (Z-axis direction) and evenly press the battery cells 100.

Meanwhile, when fastening pressurization is applied through the plurality of fastening units 300, both sides of the case body 152 of the battery cells 100 and the case terrace 156 do not directly contact adjacent peripheral components and have a predetermined separation distance. For example, the predetermined separation distance may be approximately 2 mm.

Accordingly, when the plurality of fastening units 300 and the end plate 200 are fastened, the risk of damage to the battery cells 100 may be minimized, and when an abnormal situation such as swelling of the battery cells 100 occurs, direct contact between the battery cells 100 and peripheral components is prevented, so it is possible to maximize maintenance of the insulation performance and the lifetime performance.

The battery module 10 may further include a buffer member 400 and a thermistor unit 500.

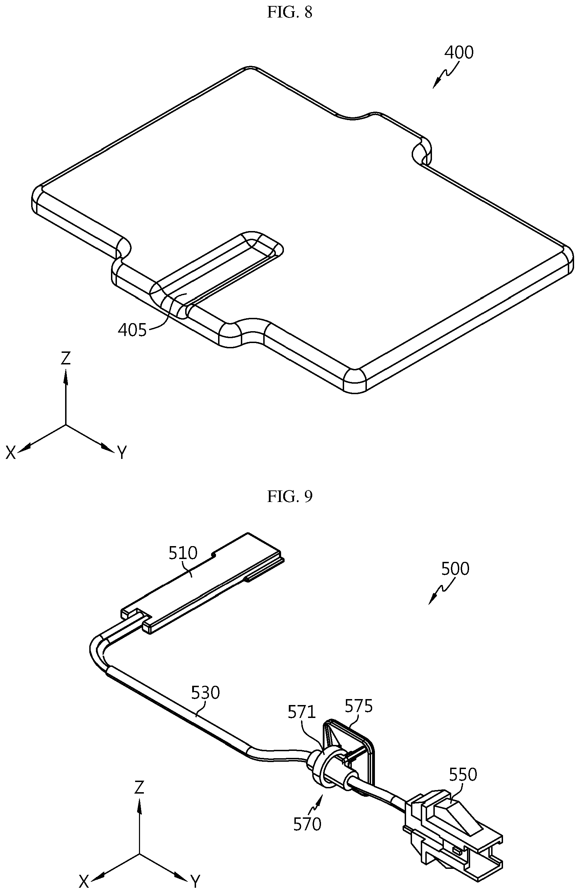

FIG. 8 is a view for describing a buffer member of the battery module of FIG. 1.

Referring to FIG. 8 and FIGS. 1 to 3 above, the buffer member 400 is disposed between the battery cells 100 in the stacking direction (Z-axis direction) and may be in surface contact with the battery cells 100 facing each other.

The buffer member 400, like the compression pads 215, 235, may be made of expanded polypropylene (EPP). Accordingly, the buffer member 400, together with the compression pads 215, 235, may buffer the impact to the battery cells 100 and secure insulation performance when pressurization is applied through the fastening unit 300 or external shock is applied.

The buffer member 400 may be disposed in the center portion of the battery cells 100 in the stacking direction (+Z-axis direction). Accordingly, the buffer member 400 may have the same separation distance as the compression pad 215 of the top plate 210 and the compression pad 235 of the bottom plate 230, so that when pressurized fastening is applied through the fastening unit 300, even pressurization of the battery cells 100 may be further maximized.

The buffer member 400 may be provided with a thermistor seating groove 405 in which a thermistor unit 500 to be described later for measuring the temperature of the battery cells 100 is seated.

The thermistor seating groove 405 may be formed equal to or larger than the thickness of the thermistor unit 500, so that the thermistor unit 500 does not protrude out of the upper surface (+Z-axis direction) of the buffer member 400 in the stacking direction (Z-axis direction) when the thermistor unit 500 is mounted.

Hereinafter, the thermistor unit 500 seated in the thermistor seating groove 405 will be described in more detail.

FIG. 9 is a view for describing a thermistor unit of the battery module of FIG. 1.

Referring to FIG. 9 and FIGS. 1 to 3 and 8 above, the thermistor unit 500 is for measuring the temperature of the battery cells 100 and may be electrically connected to an external terminal or the like.

The thermistor unit 500 may include a thermistor body 510, a thermistor wire 530, and a connector 550.

The thermistor body 510 may be seated in the thermistor seating groove 405. A temperature sensor for temperature measurement and a PCB board connected to the temperature sensor may be embedded in the thermistor body 510.

When the thermistor body 510 is seated in the thermistor seating groove 405, the thermistor body 510 may have a height equal to or lower than the height of the thermistor seating groove 405 so as not to protrude out of the thermistor seating groove 405 in the stacking direction (Z-axis direction).

Since the thermistor body 510 is disposed in the thermistor seating groove 405 of the buffer member 400, which is disposed in the center in the stacking direction (Z-axis direction) of the battery cells 100, the temperature of the battery cell 100 located in the middle in the stacking direction (Z-axis direction) among the battery cells 100 may be measured. Accordingly, in the present embodiment, temperature sensing accuracy of the battery module 10 may be improved.

The thermistor wire 530 is connected to the thermistor body 510 and may be provided with a cable having a predetermined length.

The connector 550 is for connection with an external terminal or the like and may be provided at an end of the thermistor wire 530.

The thermistor unit 500 may include a mounting member 570.

The mounting member 570 is provided on the thermistor wire 530 and may guide fixing of the thermistor unit 500. The mounting member 570 may be fixed to a bus bar assembly 700 to be described later in a hooking manner or may be attached thereto in an adhesive manner.

The mounting member 570 may be movably mounted on the thermistor wire 530 along the lengthwise direction of the thermistor wire 530.

The mounting member 570 may include a wire connection portion 571 and a fixing portion 575.

The wire connection portion 571 is provided in a ring shape having a predetermined hollow and may be interposed into the thermistor wire 530. The wire connection portion 571 may be movably mounted on the thermistor wire 530 along the lengthwise direction of the thermistor wire 530.

The fixing portion 575 is connected to the wire connection portion 571 and may be detachably fixed to the bus bar assembly 700 to be described later. The fixing portion 575 may be fixed to the bus bar assembly 700 to be described later in a hooking manner or in an adhesive manner.

Hereinafter, in the present embodiment, the fixing portion 575 is limitedly described as being fixed in an adhesive manner. To this end, an adhesive tape for fixing to the bus bar assembly 700 to be described later may be provided on one surface of the fixing portion 575.

Through the fixing portion 575, the thermistor wire 530 and the thermistor body 510 may be more stably supported inside the battery module 10.

The battery module 10 may include mica sheet 600.

Referring to FIGS. 1 to 3 above, the mica sheet 600 is provided between the pair of end plates 200 and may be provided as a pair to cover both sides (X -axis direction) of the battery cells 100 in the stacking direction (Z-axis direction).

The pair of mica sheets 600, along with the housing wing 715 of the bus bar assembly 700 to be described later, may be disposed as closely as possible to both sides (X-axis direction) of the battery cells 100.

Accordingly, the pair of mica sheets 600 suppress sparks or flame exposure to adjacent battery cells 100 when an abnormal situation such as a thermal event of the battery cells 100 occurs, and minimize air inflow into the battery module 10, so it is possible to minimize the risk of ignition or explosion of the battery module 10 in an abnormal situation.

The battery module 10 may include a bus bar assembly 700.

The bus bar assembly 700 is electrically connected to the electrode leads 130 of the battery cells 100, senses the voltage of the battery cells 100, and may be connected to an external power source or an external terminal.

Hereinafter, the bus bar assembly 700 will be described in more detail.

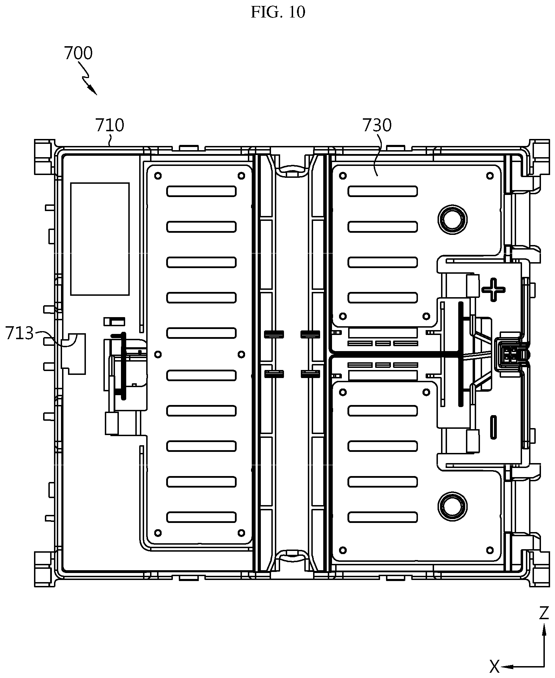

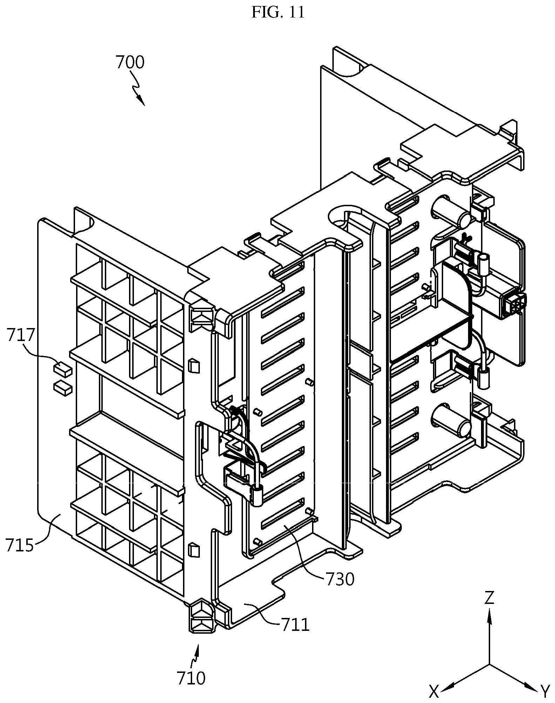

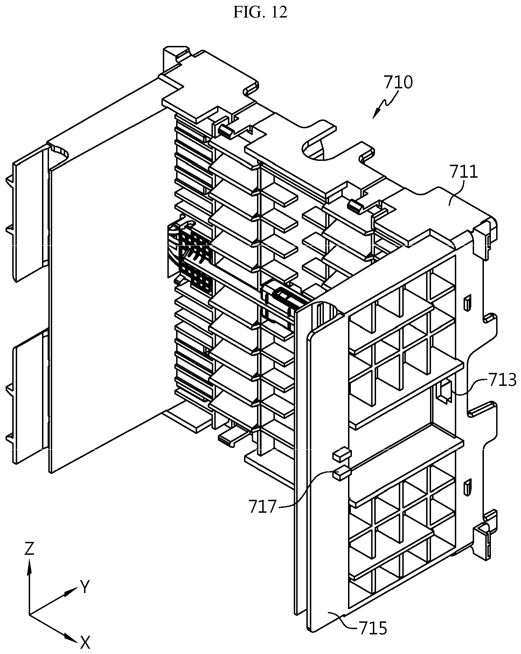

FIGS. 10 to 12 are views for describing a bus bar assembly of the battery module of FIG. 1.

Referring to FIGS. 10 to 12 and FIGS. 1 to 9 above, the bus bar assembly 700 may include a bus bar housing 710, a bus bar member 730, and a cover housing 750.

The bus bar housing 710 may cover the battery cells 100 together with the end plates 200 and the mica sheets 600.

The bus bar housing 710 may include a housing body 711 and a housing wing 715.

The housing body 711 may cover the front and rear sides (X-axis direction) of the battery cells 100. A bus bar member 730 to be described later may be mounted on the housing body 711.

A connector mounting portion 713 may be provided on the housing body 711.

The connector mounting portion 713 may be provided on one side of the housing body 711. The connector 550 of the thermistor unit 500 may be mounted on the connector mounting portion 713. Here, the connector mounting portion 713 may expose the connector 550 to the outside for connection of the connector 550 of the thermistor unit 500 to an external terminal.

The housing wing 715 is provided on both ends of the housing body 711 and may at least partially cover both sides (X-axis direction) of the battery cells 100. The housing wing 715 may cover both sides (X-axis direction) of the battery cells 100 together with the mica sheets 600.

The housing wing 715 may include a wire supporting portion 717.

The wire supporting portion 717 is for more stably supporting the thermistor wire 530 of the thermistor unit 500, and may be provided as a pair of supporting protrusions disposed with a predetermined interval on one side of the housing wing 715. The thermistor wire 530 may be interposed between the pair of supporting protrusions of the wire supporting portion 717.

The bus bar member 730 is provided on the housing body 711 of the bus bar housing 710 and may be electrically connected to the electrode leads 130 of the battery cells 100.

The cover housing 750 may cover the bus bar housing 710 in the front and rear directions (Y-axis direction) of the battery module 10. When the cover housing 750 covers the bus bar housing 710, the cover housing 750 may expose the connector 550 of the thermistor unit 500 and connection terminals for connection with external electric components such as BMS to the outside.

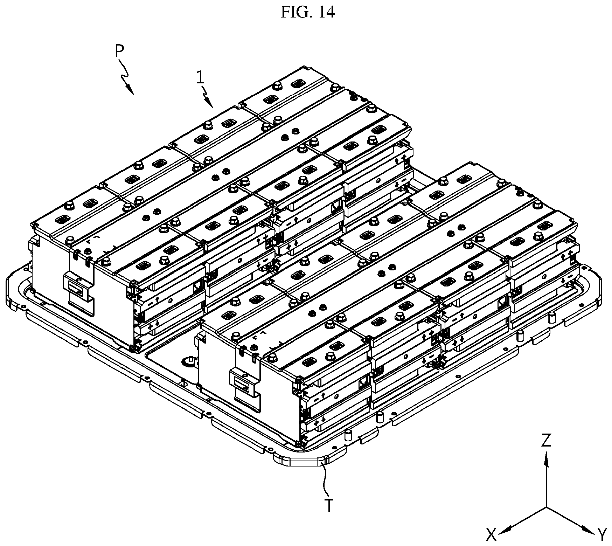

FIG. 13 is a view for describing a battery module assembly according to an embodiment of the present disclosure, and FIG. 14 is a view for describing a battery pack according to an embodiment of the present disclosure.

Referring to FIGS. 13 and 14, a battery pack P may include at least one or a plurality of battery module assemblies 1 and a pack tray T.

The at least one or plurality of battery module assemblies 1 may include a plurality of battery modules 10 and a module connection portion 50.

The plurality of battery modules 10 may be coupled to each other through a module connection portion 50 described later.

The module connection portion 50 is provided in a bar shape of a predetermined length, and may connect the plurality of battery modules 10 to each other. At this time, the module connection portion 50 may be coupled to the fastening protrusions (217, see FIG. 4) of each battery module 10.

In the present embodiment, the plurality of battery modules 10 may be connected to each other in a simpler and easier way through the module connection portion 50 to which the fastening protrusions (217, see FIG. 4) of the battery modules 10 are coupled, so the assembly process efficiency may be further increased.

The pack tray T may accommodate the at least one or plurality of battery module assemblies 1, electric components such as a BMS for controlling the battery module assembly 1, and components such as a heatsink for cooling the battery module assembly 1.

At least one or more battery packs P may be provided as an energy source of an energy storage system or a vehicle. In addition, it is also possible that the battery pack P is provided in other devices, instruments, and facilities using a secondary battery, in addition to the energy storage system or the vehicle.

As such, devices, the instruments and equipment including the battery pack P such as an energy storage system or a vehicle including the battery pack P according to the present embodiment may implement devices, instruments, facilities, or the like such as an energy storage system or a vehicle having all the advantages by the battery module 10 described above.

According to various embodiments as described above, a battery module 10 capable of improving assembly process efficiency, and a battery pack P and an energy storage system including the same may be provided.

In addition, according to various embodiments as described above, a battery module 10 capable of improving lifespan performance of battery cells 100, and a battery pack P and an energy storage system including the same may be provided.

In addition, according to various embodiments as described above, a battery module 10 capable of suppressing the transition of a fire in an abnormal situation, and a battery pack P and an energy storage system including the same may be provided.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery module, comprising:
battery cells stacked with each other;
a pair of end plates provided at both ends of the battery cells in the stacking direction of the battery cells; and
a fastening unit fastened to the pair of end plates along the stacking direction and configured to press the pair of end plates along the stacking direction.

2. The battery module according to claim 1, wherein each of the battery cells includes:
an electrode assembly;
a pair of electrode leads connected to the electrode assembly; and
a battery case including a case body configured to form an accommodation space for accommodating the electrode assembly and a case terrace configured to extend from the case body and protrude the pair of electrode leads,
wherein the pair of end plates press the case bodies of the battery cells in the stacking direction.

3. The battery module according to claim 2, wherein the pair of end plates are in surface contact with the case bodies of the battery cells in the stacking direction.

4. The battery module according to claim 2, wherein the pair of end plates include:
a top plate disposed on an upper side of the battery cells in the stacking direction; and
a bottom plate disposed on a lower side of the battery cells at an opposite side of the top plate,
wherein the top plate and the bottom plate include a compression pad provided on an inner surface facing the battery cells.

5. The battery module according to claim 4, wherein the compression pad is in surface contact with the case body of the facing battery cell.

6. The battery module according to claim 1, further comprising a buffer member disposed between the battery cells in the stacking direction and provided in surface contact with the battery cells facing each other.

7. The battery module according to claim 6, wherein the buffer member is disposed in a center portion of the battery cells in the stacking direction.

8. The battery module according to claim 6, wherein the buffer member is provided with a thermistor seating groove in which a thermistor unit for measuring temperature of the battery cells is seated.

9. The battery module according to claim 8, wherein the thermistor seating groove is formed to be equal to or larger than the thickness of the thermistor unit so that the thermistor unit does not protrude out of an upper surface of the buffer member in the stacking direction when the thermistor unit is mounted.

10. The battery module according to claim 8, wherein the thermistor unit includes:
a thermistor body seated in the thermistor seating groove;
a thermistor wire having a predetermined length and connected to the thermistor body; and
a connector provided to the thermistor wire for connection with an external terminal.

11. The battery module according to claim 10, wherein the thermistor unit includes a mounting member provided on the thermistor wire and configured to guide fixing of the thermistor unit.

12. The battery module according to claim 11, wherein the mounting member is mounted on the thermistor wire to be movable along a lengthwise direction of the thermistor wire.

13. The battery module according to claim 1, further comprising a pair of mica sheets provided between the pair of end plates and configured to cover both sides of the battery cells.

14. A battery pack, comprising at least one battery module according to claim 1.

15. An energy storage system, comprising at least one battery pack according to claim 14.
